# EUROPÄISCHE PATENTSCHRIFT

(11) **EP 3 963 492 B1**
(45) Veröffentlichungstag und Bekanntmachung des Hinweises auf die Patenterteilung: **10.07.2024**
(21) Anmeldenummer: 20722304.1
(22) Anmeldetag: 27.04.2020
(51) Int. Cl.: G06F 21/62, G06Q 10/20, G06Q 10/087

(54) **VERFAHREN ZUM DOKUMENTIEREN VON INFORMATIONEN**
PROCEDURE FOR THE DOCUMENTATION OF INFORMATION
PROCÉDURE POUR LA DOCUMENTATION DE L'INFORMATION

(30) Priorität: 29.04.2019 DE 102019110972
(43) Veröffentlichungstag der Anmeldung: 09.03.2022
(73) Patentinhaber: Tapio GmbH, 72202 Nagold (DE)
(72) Erfinder: KALMBACH, Jochen, 75387 Neubulach (DE); NEUMANN, Christian, 50968 Köln (DE); SCHWENDELE, Helmut, 72186 Empfingen (DE); VINSKI, Marijo, 72293 Glatten (DE); VOLM, Matthias, 72336 Balingen (DE)
(74) Vertreter: Hoffmann Eitle
(86) Internationale Anmeldenummer: PCT/EP2020/061631
(87) Internationale Veröffentlichungsnummer: WO 2020/221698

(56) Entgegenhaltungen:
- WO-A1-2017/099972
- US-A1- 2002 164 025
- US-A1- 2012 246 710
- US-A1- 2016 078 208

## Beschreibung

### Technisches Gebiet

Die Erfindung betrifft ein Verfahren sowie ein System zum Dokumentieren von Informationen zu einem Gegenstand, wie beispielsweise einem Bearbeitungswerkzeug. Rein beispielhaft kann es sich bei einem solchen Gegenstand um einen Fräser handeln. Das Verfahren sowie das System finden insbesondere im Bereich der holzverarbeitenden Industrie Anwendung.

### Stand der Technik

Es ist bekannt, Informationen auf einem Cloud-Server zu speichern und diese Informationen mittels eines Passworts zu schützen. Ein Zugriff auf die Informationen im Rahmen einer Leseberechtigung oder einer Lese- und Schreibberechtigung kann somit ermöglicht werden.

Allerdings kann ein derartiges Vorgehen den steigenden Anforderungen an die Kooperation von mehreren beteiligten Akteuren nicht oder nicht im vollen Maße gerecht werden. Insbesondere Sicherheitsaspekte erfordern neue Ansätze, die mit den bekannten Systemen oder Verfahren nicht erreicht werden können. Das Dokument zum Stand der Technik WO 2017/099972 A1 (VISA INT SERVICE ASS [US]) beschreibt Systeme und Verfahren, die sich auf die Speicherung und den Abruf von Gerätedaten in einem Gerät beziehen, einschließlich Eigentums-, Verhaltens- und Verlaufsdaten über mehrere Eigentumsübertragungen hinweg. Die vorliegende Erfindung ist in den unabhängigen Ansprüchen dargelegt, wobei einige optionale Merkmale in den davon abhängigen Ansprüchen aufgeführt sind.

### Gegenstand der Erfindung

Ziel der Erfindung ist es, ein Verfahren sowie ein entsprechendes System bereitzustellen, um die Sicherheit bezüglich Informationen zu einem Gegenstand zu erhöhen.

Anspruch 1 stellt ein entsprechendes Verfahren bereit. Weitere bevorzugte Ausführungsformen sind in den abhängigen Ansprüchen aufgeführt. Ferner betrifft die Erfindung ein System, das bevorzugt eingerichtet ist, einzelne oder auch alle Verfahrensschritte durchzuführen.

Das Verfahren umfasst die folgenden Schritte: Erstellen eines Datensatzes zu einem Gegenstand mit mehreren Datenkategorien, wobei zumindest eine der Datenkategorien das Anlegen mehrerer Datenebenen ermöglicht, Anlegen einer weiteren Datenebene im Zuge einer Übergabe des Gegenstands und des Datensatzes an einen Nutzer, die jeweils durch einen elektronischen Schlüssel schützbar ist, und Verwenden des Gegenstands und dabei Abspeichern von bei Verwendung des Gegenstands erfassten Informationen in der weiteren Datenebene. Es ist bevorzugt, dass die Schritte des Erstellens, Anlegens sowie Verwendens in der genannten Reihenfolge durchgeführt wird.

Das Verfahren hat den Vorteil, dass durch eine elektronische Datenverarbeitung eine hohe Datensicherheit gewährleistet werden kann. Ferner gewährleisten Datenebenen mit jeweiliger Absicherung, dass auf eine bestimmte Datenebene nur derjenige Zugriff hat, der auch über den entsprechenden Sicherheitsschlüssel verfügt. Somit kann bei Weitergabe des Datensatzes gewährleistet werden, dass die weitergebende Instanz die Zugriffsrechte über die bestimmte Datenebene behält oder durch Weitergabe des elektronischen Schlüssels gezielt weitergeben kann.

Anhand des Datensatzes können beispielsweise Informationen zur Abnutzung oder Umwandlung des Gegenstandes, der insbesondere ein Bearbeitungswerkzeug sein kann, gespeichert werden.

Der Nutzer hat insbesondere den Vorteil, dass Daten ohne potentielle Übernahmefehler in der Maschine verwendet werden. Auf Grund der elektronisch fehlerfrei übernommenen Daten kann die Maschine feststellen, ob der Gegenstand, insbesondere das Bearbeitungswerkzeug, im zulässigen Bereich vorliegt oder betrieben wird. Ferner ist eine Erweiterung des Datenbestandes mit eigenen Daten möglich, welche während des Betriebs anfallen und welche zur Verwaltung genutzt werden können. Über den Produktlebenszyklus können Daten mit anderen Akteuren, insbesondere Hersteller, Dienstleister, Konsumenten, usw. ausgetauscht werden. Konkrete Beispiele sind Endverbraucher, Maschinen-, Werkzeug-, Software- und Materialhersteller und Produzenten von Möbeln. Die Akteure können als Datenanbieter und/oder als Datenkonsument auftreten.

Dies vereinfacht, sichert und verbessert die Leistungserbringung von Dienstleistern und/oder Herstellern. Analysen zur Leistung, Qualität, Standzeiten werden ermöglicht. Ferner kann der Datensatz vom Nutzer zur weiteren Verbesserung der Prozesse auf der Basis der Informationen im Datensatz genutzt werden. Kenntnisse mehrerer Akteure können hierzu gebündelt werden. Ferner ist eine lückenlose Dokumentation möglich.

Über den gesamten Produktlebenszyklus kann der Hersteller des Gegenstandes (beispielsweise des Bearbeitungswerkzeuges) Informationen zu seinem Produkt an den Kunden liefern. Wenn der Kunde bereit ist, Daten mit dem Hersteller zu teilen, können diese Informationen aus dem operativen Betrieb der Güter dem Hersteller wertvolle Informationen und Erkenntnisse zu seinen Produkten im Einsatz liefern. Damit kann der Gegenstand weiter angepasst und verbessert werden.

Der genannte Gegenstand kann ein sogenannter aktiver Gegenstand sein, der selbst Information(en) erfasst oder erzeugt, und gegebenenfalls diese Information(en) abspeichert. Beispielsweise handelt es sich bei einem solchen Gegenstand um ein Bearbeitungsaggregat oder eine Bearbeitungsmaschine.

Gemäß einer anderen Ausführungsform ist der Gegenstand passiv. Das Erfassen und Abspeichern der Information(en) erfolgt in diesem Fall durch eine Einheit, ein Gerät oder manuell mit elektronischen Mitteln oder ähnlichem. Als konkretes Beispiel kann ein Bearbeitungswerkzeug genannt werden. Eine Information zum Bearbeitungswerkzeug wird von der dieses Werkzeug einsetzenden Maschine erfasst. Ein weiteres Ausführungsbeispiel eines passiven Gegenstandes ist ein Beschichtungsmaterial. Eine dieses Beschichtungsmaterial einsetzende Maschine erfasst den Verbrauch des Beschichtungsmaterials.

Es ist bevorzugt, dass der Gegenstand ausgewählt ist aus der Gruppe, umfassend: ein Bearbeitungswerkzeug, ein Beschichtungsmaterial, ein Verbrauchsstoff, eine Maschine, insbesondere eine Maschine zur Bearbeitung von Holzwerkstücken. Ein Bearbeitungswerkzeug kann beispielsweise ein Fräswerkzeug, ein Bohrer, eine Ziehklinge oder ähnliches sein. Die Maschine zur Bearbeitung eines Werkstücks, wie eines Werkstücks aus Holz, kann eine aktive Komponente sein oder eine aktive Komponente umfassen.

Beim genannten Beschichtungsmaterial handelt es sich beispielsweise um eine Kunststoff-Beschichtungsmaterial oder ein Furnier, wobei bevorzugt ist, dass das Beschichtungsmaterial streifenförmig ausgebildet ist. Als Verbrauchsstoff kann beispielsweise ein Haftmittel, ein Primer, Druckmaterial oder dergleichen zum Einsatz kommen.

Ferner ist bevorzugt, dass das Verwenden des Gegenstands einen Einsatz des Gegenstands in einer Bearbeitungsmaschine betrifft. Beispielsweise handelt es sich bei dem Gegenstand um ein Beschichtungsmaterial, das mittels der Bearbeitungsmaschine an einem Werkstück angebracht wird. Ein solches Beschichtungsmaterial liegt beispielsweise als Rollenware vor. Im Zuge Nutzung des Beschichtungsmaterials verringert sich die zur Verfügung stehende Menge des Beschichtungsmaterials.

Beispielsweise kann von einer Bearbeitungsmaschine die digitale Information des eingesetzten Haftmittels gelesen und interpretiert werden. Daraufhin verarbeitet sie den Klebstoff mit optimalen Verarbeitungsparametern. Dabei kann der Klebstoffhersteller (Datenanbieter) definieren, welche Informationen des Klebstoffs von wem (Datenkonsument) verwendet werden dürfen.

Gemäß einer weiteren Ausführungsform betrifft das Verwenden des Gegenstands eine Wartung des Gegenstands. Beispielsweise handelt es sich um eine Wartung eines Bearbeitungswerkzeuges. Es ist bevorzugt, dass der Gegenstand und der Datensatz zur Wartung einem Wartungsunternehmen übergeben werden. Somit kann das Wartungsunternehmen auf den Datensatz zugreifen und Informationen zum Datensatz hinzufügen. Beim Verarbeiten des Haftmittels entstehen wiederum neue Informationen. Das Haftmittel und die Maschine befinden sich im Besitz eines Betreibers. Somit sind die neuen Informationen auch im Besitz des Betreibers (Datenanbieter). Dieser kann nun definieren, wer (Datenkonsument) diese Daten wie verwenden darf.

Auf dieser Basis können die beteiligten Akteure den Umgang mit den von ihnen erstellten Daten definieren. Ein Unternehmen kann die Rolle des Datenkonsumenten und/oder - anbieters anhand der Eigentumsverhältnisse der wirtschaftlichen Güter annehmen.

Der Datensatz kann in einer Cloud gespeichert werden, so dass ein Zugriff ortsunabhängig und/oder ohne eine spezielle Software erfolgen kann. Ferner wird auf diese Weise eine hohe Verfügbarkeit ermöglicht.

Eine Steuereinrichtung einer Bearbeitungsmaschine kann bei Einsatz des Gegenstands auf den Datensatz zugreifen, so dass Einstellung an der Bearbeitungsmaschine vorgenommen werden können und eine optimale Abstimmung des Fertigungsprozesses ermöglicht wird.

Gemäß einer anderen Ausführungsform ist möglich, dass vor Verwendung des Gegenstands mittels eines Computers, Tablets oder Smartphones auf den Datensatz zugegriffen wird und die im Datensatz enthaltenen Informationen mittels eines Eingabegeräts in die Steuereinrichtung der Bearbeitungsmaschine eingegeben werden. Auch ist es möglich, mittels des Eingabegeräts einen Code, beispielsweise einen QR-Code, auszulesen, der Informationen aus dem Datensatz enthält oder auf diesen verweist.

Gemäß einer Ausführungsform ist es vorgesehen, dass die Datenkategorien Stammdaten, Instanzdaten und Prozessdaten umfassen, wobei die Stammdaten herstellerseitig erstellte, statische Daten, insbesondere Daten zur Baureihe des Gegenstands, die Instanzdaten Daten eines einzelnen, individuellen Gegenstands, wie geometrische Daten des Gegenstands oder die individuelle Seriennummer), und Prozessdaten Informationen aus dem Einsatz des Gegenstands in einer Bearbeitungsmaschine sind.

Der Schlüssel kann Lese- und/oder Schreibrechte für die weitere Datenebene oder Teile der Datenebene des Datensatzes umfassen. Somit ist es möglich, dass gezielt Zugriffsrechte auf Bereiche des Datensatzes gewährt werden können, die es ermöglich, Teile des Datensatzes zu ändern oder zu ergänzen.

Der Schlüssel kann weitere Attribute aufweisen, beispielsweise ein Attribut für einen zeitlich begrenzten Zugriff, für eine bestimmte Anzahl von Zugriffen oder für ein bestimmtes Datenvolumen.

Ein Schlüssel eines bestimmten Nutzers kann sich von einem Schlüssel eines anderen Nutzers unterscheiden.

Bei Übergabe des Datensatzes an einen weiteren Nutzer oder Wartungsunternehmen kann der Schlüssel übergeben werden, so dass der weitere Nutzer oder das Wartungsunternehmen jeweils zu ergänzende Informationen dem Datensatz hinzufügen kann.

Es ist bevorzugt, dass im Rahmen des Verfahrens der Zugriff der Nutzer dokumentiert wird. Auf diese Weise kann im Sinne einer Buchführung einzelne Zugriff, insbesondere die Zugriffsperson, die Zugriffszeit und/oder die abgerufene oder geänderte Information gespeichert werden.

Das Erfassen kann ferner ein Berechnen oder Ableiten der Information(en) vor dem Abspeichern umfassen. Auf diese Weise ist es möglich, die Information(en) zu komprimieren und/oder für die weitere Verarbeitung aufzuarbeiten.

Ferner kann es vorgesehen sein, Informationen unterschiedlicher Quellen in einer oder in mehreren Datenebenen miteinander zu verknüpfen. Auf diese Weise ist es möglich, verschiedene Informationen zusammenzuführen.

Gemäß einer weiteren Ausführungsform ist es vorgesehen, einen Datensatz mit mehreren Dimensionen (matrixartig) anzulegen, insbesondere wenn Informationen aus unterschiedlichen Quellen miteinander verknüpft werden.

Ferner betrifft die Erfindung ein System zum Dokumentieren von Informationen eines Gegenstandes, insbesondere eines Bearbeitungswerkzeugs, eines Beschichtungsmaterials, eines Verbrauchsstoff, beispielsweise gemäß einem der zuvor genannten Ausführungsformen. Das System oder eine Einrichtung hiervon kann eingerichtet sein, ein Verfahren gemäß einem der zuvor genannten Aspekte durchzuführen.

Das System umfasst: eine Speichereinrichtung zum Speichern eines Datensatzes zu einem Gegenstand, wie einem Bearbeitungswerkzeug, wobei der Datensatz mehrere Datenkategorien aufweist und zumindest eine der Datenkategorien das Anlegen mehrerer Datenebenen ermöglicht, wobei der Datensatz bei Übergabe des Gegenstands an einen Nutzer um eine weitere Datenebene ergänzt wird, die durch einen elektronischen Schlüssel schützbar ist, sowie Bearbeitungsmaschine, die eingerichtet ist, den Gegenstand zu verwenden, wobei die Bearbeitungsmaschine einen oder mehrere Sensoren umfasst, die eingerichtet sind, Informationen zur Verwendung des Gegenstands zu erfassen und in der weiteren Datenebene des Datensatzes abzuspeichern.

Das Erfassen kann ferner ein Berechnen oder Ableiten der Information(en) vor dem Abspeichern umfassen. Auf diese Weise ist es möglich, die Information(en) zu komprimieren und/oder für die weitere Verarbeitung aufzuarbeiten.

Ein solches System hat unter anderem den Vorteil, dass durch eine elektronische Datenverarbeitung eine hohe Datensicherheit gewährleistet werden kann und die genannten Datenebenen mit jeweiliger Absicherung eine hohe Sicherheit gewährleisten, insbesondere dass auf eine bestimmte Datenebene nur derjenige Zugriff hat, der auch über den entsprechenden Sicherheitsschlüssel verfügt. Somit kann bei Weitergabe des Datensatzes gewährleistet werden, dass die weitergebende Instanz die Zugriffsrechte über die bestimmte Datenebene behält oder durch Weitergabe des elektronischen Schlüssels gezielt weitergeben kann. Anhand des Datensatzes können beispielsweise Informationen zur Abnutzung oder Umwandlung des Gegenstandes, der insbesondere ein Bearbeitungswerkzeug sein kann, gespeichert werden.

Insbesondere ist es vorgesehen, dass die Speichereinrichtung eine global verfügbare Speichereinrichtung, insbesondere eine Cloud, ist.

### Kurze Beschreibung der Zeichnung

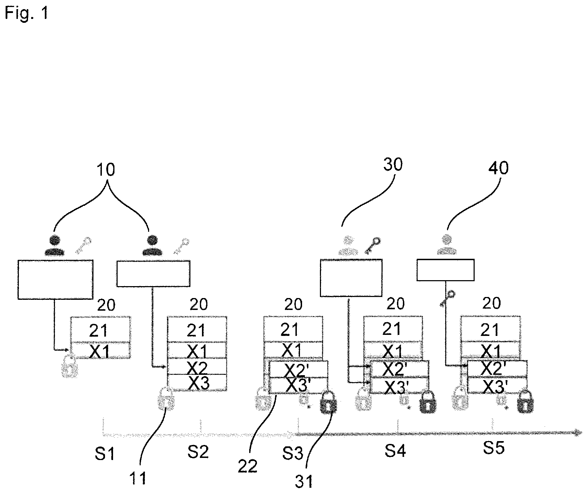

- Fig. 1: zeigt eine schematische Ansicht zur Veranschaulichung eines erfindungsgemäßen Verfahrens.

### Beschreibung der bevorzugten Ausführungsform

Nachfolgend wird eine bevorzugte Ausführungsform der Erfindung beschrieben. Obwohl die Ausführungsform lediglich beispielhaft, und nicht einschränkend, ist, können Merkmale der Ausführungsform auch zur Spezifizierung der Erfindung herangezogen werden. Ferner können Modifikationen miteinander kombiniert werden, um weitere Ausführungsformen der Erfindung auszubilden.

Die Ausführungsform betrifft ein Verfahren sowie ein System zum Dokumentieren von Informationen zu einem Bearbeitungswerkzeug als einem Beispiel für einen Gegenstand. Die Ausführungsform soll dabei an einem konkreten Beispiel eines Fräsers erläutert werden, wobei auch andere Bearbeitungswerkzeuge in diesem Zusammenhang denkbar sind. Weitere Beispiele für Gegenstände sind ein Beschichtungsmaterial, insbesondere eine streifenförmiges Beschichtungsmaterial zum Beschichten einer Schmalseite eines plattenförmigen Werkstücks, ein Haftmittel, ein Material zum Bedrucken eines Werkstücks oder dergleichen.

Zunächst wird der Fräser bei einem Werkzeughersteller 10 hergestellt, sodass der Fräser als physischer Gegenstand vorliegt. Unmittelbar nach der Herstellung des Fräsers ist dieses Werkzeug noch nicht eindeutig identifizierbar. Vielmehr gehört der Fräser zu einer bestimmten Baureihe und einer bestimmten Charge (Stammdaten). Die Eigenschaften für die genannte Baureihe und Charge sind dem Werkzeughersteller bekannt.

Nach Herstellung des physischen Werkzeugs (hier: Fräser) wird ein Datensatz 20 erstellt, der als Datenkategorien Stammdaten X1, Instanzdaten X2 sowie Prozessdaten X3 umfasst. Das Herstellen des Datensatzes kann manuell oder beispielsweise im Zuge einer erfolgreich durchlaufenen Qualitätskontrolle maschinell erfolgen.

Die Stammdaten (X1) sind herstellerseitig erstellte, statische Daten, insbesondere Daten zur Baureihe oder Seriennummer des Bearbeitungswerkzeuges. Eine Seriennummer kann insbesondere als Stammdaten betrachtet werden, wenn die Seriennummer für mehrere typgleiche Bearbeitungswerkzeuge gilt.

Die Instanzdaten (X2) sind geometrische Daten des Bearbeitungswerkzeuges. Im Verlauf der Inbetriebnahme beim Hersteller entstehen ferner Prozessdaten (X3), die Informationen zum Einsatz des Bearbeitungswerkzeuges Gegenstands in einer Bearbeitungsmaschine betreffen, beispielsweise Schnittweg, bearbeitetes Material und verwendete Maschine. Auch kann eine Seriennummer den Instanzdaten zugeordnet werden, wenn die Seriennummer individuell einem bestimmten Bearbeitungswerkzeug zugeordnet ist.

Dem Datensatz 20 wird zunächst eine bestimmte Identifikationsnummer 21 zugewiesen, sodass der Datensatz 20 dem Fräser zugeordnet ist. Ferner werden die dem Werkzeughersteller bekannten Stammdaten X1 in den Datensatz 20 eingefügt. Die Stammdaten enthalten beispielsweise Informationen bezüglich der Baureihe des Bearbeitungswerkzeugs (Fräser). Dieser Schritt wird in Figur 1 als Schritt S1 zusammengefasst.

Nachdem der Fräser hergestellt wurde, können seitens des Herstellers oder im späteren Verlauf des Lebenszyklus des Bearbeitungswerkzeugs bestimmte Anpassungen am Bearbeitungswerkzeug vorgenommen werden. Ein Beispiel einer solchen Anpassung ist eine Schleifbearbeitung am Fräser, die zur Veredelung des Bearbeitungswerkzeugs führt. Eine solche Schleifbearbeitung kann nach Erstellen des Fräsers herstellerseitig durchgeführt werden. Durch die Schleifbearbeitung ergibt sich ein individueller Durchmesser des Fräsers. Dieser Kennwert wird als Teil der Instanzdaten X2 im Datensatz 20 dokumentiert. Die Datenkategorie der Prozessdaten X3 wird im Datensatz 20 erstellt, jedoch üblicherweise herstellerseitig nicht mit weiteren Informationen versehen. Allerdings könnte beispielsweise ein Testlauf mit einem bestimmten Fräser durchgeführt werden, so dass die Möglichkeit besteht, die aus dem Test hervorgehenden Informationen in der Datenkategorie der Prozessdaten X3 zu dokumentieren. Das Erstellen und/oder Dokumentieren der Instanzdaten X2 und der Prozessdaten X3 wird im Schritt S2 gemäß dem in Fig. 1 dargestellten Verfahren durchgeführt.

Die vom Hersteller des Fräsers im Datensatz 20 hinterlegten Informationen werden mit einem herstellerseitigen Schlüssel 11 geschützt. Der Schlüssel 11 kann Lese- und/oder Schreibrechte für die genannten Datenkategorien umfassen.

Bis zur Auslieferung/Inbetriebnahme des Bearbeitungswerkzeuges befindet sich der Fräser im Besitz des Werkzeugherstellers. Dies betrifft ebenfalls den Datensatz 20. Eine Auslieferung des Fräsers und damit auch eine Übergabe des Datensatzes 20 wird in Schritt S3 durchgeführt.

Der Kunde 30 kann im Datensatz 20 eine weitere Datenebene 22 einfügen, die sowohl Instanzdaten X2' als auch Prozessdaten X3' umfasst. Eine solche Datenebene 22 kann auch durch das System eingefügt werden, wenn beispielsweise bestimmte Randbedingungen dies erfordern. Der Schlüssel 11 kann Lese- und/oder Schreibrechte für die weitere Datenebene 22 umfassen.

Der Kunde kann in diesem Zusammenhang aus dem Datensatz Daten für den Betrieb des Fräsers in der Bearbeitungsmaschine übernehmen, beispielsweise durch einen entsprechenden Zugriff auslesen oder durch Übergabe an einen Computer, Tablet oder Smartphone oder durch einen Ausdruck lesbar und damit manuell in eine Steuer- oder Speichereinrichtung eintragbar machen, damit der Fräser entsprechend der Spezifikationen der Maschine korrekt betrieben werden kann. Die Übergabe der Daten kann auf elektronischem Wege fehlerfrei erfolgen und in der Bearbeitungsmaschine entsprechend verarbeitet werden.

Während des Betriebs des Fräsers in der Bearbeitungsmaschine fallen neue Daten an, die vom Kunden, vorzugsweise durch Sensoren oder eine Berechnung mit einer Steuereinrichtung der Bearbeitungsmaschine, ermittelt werden können. Die ermittelten Daten können bei Bedarf in der Bearbeitungsmaschine für die spätere Verwendung aufbereitet werden. Der dem Kunden vorliegende Datensatz 20 ermöglicht nunmehr, die seitens des Kunden ermittelten Daten entsprechend der Kategorie im Instanzdaten X2' oder Prozessdaten X3' des Datensatzes 20 zu dokumentieren.

Beispielsweise können Lagerorte, bearbeitete Materialien, Schnittmeter o.Ä. über die Betriebszeit des Fräsers festgehalten werden. Hierzu hat der Kunde auf die weitere Datenebene 22 des Datensatzes 20 Zugriff. Die Daten werden durch einen kundenspezifischen Schlüssel 31 geschützt. Der kundenspezifische Schlüssel 31 kann Lese- und/oder Schreibrechte für die weitere Datenebene 22 des Datensatzes 20 umfassen.

Im Lebenszyklus des Fräsers kann eine Wartung erforderlich sein (Schritt S5). Wird der Fräser im Laufe des Lebenszyklus des Fräsers nachgeschärft oder in anderer Weise weiter vergütet, ändert sich der Durchmesser des Fräsers. Die Wartung des Fräsers kann durch ein Wartungsunternehmen 40 durchgeführt werden. Zur Durchführung der Wartung wird dem Wartungsunternehmen 40 sowohl der Fräser selbst als auch der Datensatz 20 übergeben. Ferner kann das Wartungsunternehmen 40 mittels des ebenfalls weitergegebenen Schlüssels 31 Zugriffsrechte auf die Datenebene 22 des Datensatzes 20 erhalten.

Die Änderung kann vom Wartungsunternehmen 40 im Datensatz 20 hinterlegt werden (insbesondere geänderte Instanzdaten X2'), wenn der Drittanbieter den Schlüssel des Kunden für den Datensatz des Fräsers erhält, um die Daten anzupassen. Somit können die Daten bezüglich des Fräsers kontinuierlich aktualisiert werden.

Während des Lebenszyklus des Fräsers kann der Hersteller 10 dem Kunden 30 weitere Informationen zur Verfügung stellen, die ebenfalls im Datensatz hinterlegt werden können. Auch kann der Hersteller die Kunden über ein Nachfolgeprodukt oder Alternativen informieren.

Falls der Kunde 30 den Fräser weiterverkauft, kann im Datenansatz eine zusätzliche Datenebene angelegt werden, in der der weitere Kunde spezifische Instanzdaten und Prozessdaten ablegen und durch einen entsprechenden Schlüssel schützen kann.

## Patentansprüche

1. Computerimplementiertes Verfahren zum Dokumentieren von Informationen zu einem Gegenstand,
Erstellen eines Datensatzes (20) zu einem Gegenstand mit mehreren Datenkategorien (X1, X2, X3), wobei zumindest eine der Datenkategorien das Anlegen mehrerer Datenebenen ermöglicht,
Anlegen einer weiteren Datenebene (22) im Zuge einer Übergabe des Gegenstands und des Datensatzes (20) an einen Nutzer, die jeweils durch einen elektronischen Schlüssel (31) schützbar ist,
Verwenden des Gegenstands und dabei Abspeichern von bei Verwendung des Gegenstands erfassten Informationen in der weiteren Datenebene (22),
wobei das Verwenden des Gegenstands einen Einsatz des Gegenstands in einer Bearbeitungsmaschine betrifft, und
wobei die Datenkategorien Stammdaten (X1), Instanzdaten (X2) und Prozessdaten (X3) umfassen, wobei die Stammdaten (X1) herstellerseitig erstellte, statische Daten, insbesondere Daten zur Baureihe des Gegenstands, die Instanzdaten (X2) geometrische Daten des Gegenstands und Prozessdaten (X3) Informationen zum Einsatz des Gegenstands in einer Bearbeitungsmaschine betreffen.

2. Verfahren gemäß Anspruch 1, **dadurch gekennzeichnet, dass** der Gegenstand ausgewählt ist aus der Gruppe, umfassend:
ein Bearbeitungswerkzeug, insbesondere ein Fräser, ein Beschichtungsmaterial, insbesondere Schmalflächen-Beschichtungsmaterial, ein Verbrauchsstoff, insbesondere Lack oder Haftmittel, oder eine Bearbeitungsmaschine.

3. Verfahren gemäß einem der vorangegangenen Ansprüche, **dadurch gekennzeichnet, dass** das Verwenden des Gegenstands eine Wartung des Gegenstands betrifft, wobei bevorzugt ist, dass der Gegenstand und der Datensatz (20) zur Wartung einem Wartungsunternehmen (40) übergeben werden.

4. Verfahren gemäß einem der vorangegangenen Ansprüche, **dadurch gekennzeichnet, dass** der Datensatz (20) in einer Cloud gespeichert wird.

5. Verfahren gemäß einem der vorangegangenen Ansprüche, **dadurch gekennzeichnet, dass** eine Steuereinrichtung einer Bearbeitungsmaschine bei Einsatz des Gegenstands auf den Datensatz (20) zugreift.

6. Verfahren gemäß einem der vorangegangenen Ansprüche, **dadurch gekennzeichnet, dass** der Schlüssel (31) Lese- und/oder Schreibrechte für die weitere Datenebene (22) oder Teile der Datenebene des Datensatzes (20) umfasst.

7. Verfahren gemäß einem der vorangegangenen Ansprüche, **dadurch gekennzeichnet, dass** bei Übergabe des Datensatzes (20) an einen weiteren Nutzer oder Wartungsunternehmen (40) der Schlüssel (31) übergeben wird.

8. Verfahren gemäß einem der vorangegangenen Ansprüche, **dadurch gekennzeichnet, dass** der Schlüssel (31) ein oder mehrere Attribute aufweist, ausgewählt aus: einem zeitlich begrenzten Zugriff, für eine bestimmte Anzahl von Zugriffen oder für ein bestimmtes Datenvolumen.

9. Verfahren gemäß einem der vorangegangenen Ansprüche,
**dadurch gekennzeichnet, dass** ein aktiver Gegenstand die Informationen des aktiven oder passiven Gegenstands erfasst oder eine Einheit oder ein Gerät zum Erfassen der Informationen des Gegenstands verwendet wird,
wobei ein aktiver Gegenstand selbst Information(en) erfasst oder erzeugt, und
wobei bei einem passiven Gegenstand ein Erfassen und Abspeichern der Information(en) durch eine Einheit oder ein Gerät erfolgt.

10. System zum Dokumentieren von Informationen eines Gegenstands, umfassend:
eine Speichereinrichtung zum Speichern eines Datensatzes (20) zu einem Gegenstand, wobei der Datensatz (20) mehrere Datenkategorien (X1, X2, X3) aufweist und zumindest eine der Datenkategorien das Anlegen mehrerer Datenebenen ermöglicht,
wobei der Datensatz (20) bei Übergabe des Datensatzes (20) an einen Nutzer um eine weitere Datenebene (22) ergänzt wird, die durch einen elektronischen Schlüssel schützbar ist,
eine Maschine, die eingerichtet ist, den Gegenstand zu verwenden, wobei die Maschine einen oder mehrere Sensoren umfasst, die eingerichtet sind, Informationen zur Verwendung des Gegenstands zu erfassen und in der weiteren Datenebene (22) des Datensatzes (20) abzuspeichern,
wobei die Maschine eine Bearbeitungsmaschine ist, und wobei die Datenkategorien Stammdaten (X1), Instanzdaten (X2) und Prozessdaten (X3) umfassen, wobei die Stammdaten (X1) herstellerseitig erstellte, statische Daten, insbesondere Daten zur Baureihe des Gegenstands, die Instanzdaten (X2) geometrische Daten des Gegenstands und Prozessdaten (X3) Informationen zum Einsatz des Gegenstands in einer Bearbeitungsmaschine betreffen.

11. System gemäß Anspruch 10, **dadurch gekennzeichnet, dass** die Speichereinrichtung eine global verfügbare Speichereinrichtung, insbesondere eine Cloud, ist.

12. System gemäß Anspruch 10 oder 11, **dadurch gekennzeichnet, dass** die Bearbeitungsmaschine eine Holzbearbeitungsmaschine und/oder eine Maschine zum Fördern von plattenförmigen Werkstücken ist.

## Claims

1. Computer-implemented method for documenting information on an object,
creating a data set (20) for an object with multiple data categories (X1, X2, X3), wherein at least one of the data categories makes it possible to create multiple data levels,
creating a further data level (22), which is protectable by an electronic key (31), when handing the object and the data set (20) over to a user,
using the object and thereby storing information collected when using the object in the further data level (22),
wherein the use of the object relates to the use of the object in a processing machine, and
wherein the data categories comprise master data (X1), instance data (X2) and process data (X3), wherein the master data (X1) relate to static data created by the manufacturer, in particular data relating to the model series of the object, the instance data (X2) relate to geometric data of the object and process data (X3) relate to information on the use of the object in a processing machine.

2. Method according to claim 1, **characterised in that** the object is selected from the group comprising:
a processing tool, in particular a milling cutter, a coating material, in particular narrow surface coating material, a consumable, in particular varnish or adhesive, or a processing machine.

3. Method according to one of the preceding claims, **characterised in that** the use of the object relates to maintenance of the object, wherein it is preferred if the object and the data set (20) are handed over to a maintenance company (40) for maintenance.

4. Method according to one of the preceding claims, **characterised in that** the data set (20) is stored in a cloud.

5. Method according to one of the preceding claims, **characterised in that** a control device of a processing machine accesses the data set (20) when the object is used.

6. Method according to one of the preceding claims, **characterised in that** the key (31) includes read and/or write permissions for the further data level (22) or parts of the data level of the data set (20).

7. Method according to one of the preceding claims, **characterised in that** the key (31) is handed over when the data set (20) is handed over to another user or maintenance company (40).

8. Method according to one of the preceding claims, **characterised in that** the key (31) has one or more attributes, selected from: access for a limited period of time, for a certain number of accesses or for a certain volume of data.

9. Method according to one of the preceding claims, **characterised in that** an active object collects the information on the active or passive object, or a unit or device is used to collect the information on the object, wherein an active object collects or generates information itself, and
wherein, in the case of a passive object, the information is collected and stored by a unit or a device.

10. System for documenting information on an object, comprising:
a storage medium for storing a data set (20) relating to an object, wherein the data set (20) has multiple data categories (X1, X2, X3) and at least one of the data categories makes it possible to create multiple data levels,
wherein the data set (20) is supplemented by a further data level (22), which can be protected by an electronic key, when the data set (20) is handed over to a user,
a machine which is configured to use the object, wherein the machine comprises one or more sensors which are configured to collect information on the use of the object and to store it in the further data level (22) of the data set (20),
wherein the machine is a processing machine, and wherein the data categories comprise master data (X1), instance data (X2) and process data (X3), wherein the master data (X1) relate to static data created by the manufacturer, in particular data on the model series of the object, the instance data (X2) relate to geometric data of the object and process data (X3) relate to information on the use of the object in a processing machine.

11. System according to claim 10, **characterised in that** the storage medium is a globally available storage medium, in particular a cloud.

12. System according to claim 10 or 11, **characterised in that** the processing machine is a woodworking machine and/or a machine for conveying panel-formed workpieces.

## Revendications

1. Procédé mis en oeuvre par ordinateur destiné à documenter des informations concernant un objet,
la création d'un jeu de données (20) concernant un objet avec plusieurs catégories de données (X1, X2, X3), au moins une des catégories de données permettant l'application de plusieurs niveaux de données,
l'application d'un niveau de données supplémentaire (22) dans le cadre d'un transfert de l'objet et du jeu de données (20) à un utilisateur, qui peut être protégé respectivement par une clé (31) électronique,
l'utilisation de l'objet et, dans ce cadre, la sauvegarde d'informations détectées lors de l'utilisation de l'objet dans le niveau de données supplémentaire (22),
dans lequel
l'utilisation de l'objet concerne un emploi de l'objet dans une machine d'usinage, et
dans lequel les catégories de données comprennent des données souches (X1), des données d'instance (X2) et des données de processus (X3), dans lequel les données souches (X1) concernent des données statiques créées côté fabricant, en particulier des données concernant le modèle de l'objet, les données d'instance (X2) concernent des données géométriques de l'objet et des données de processus (X3) concernent des informations concernant l'utilisation de l'objet dans une machine d'usinage.

2. Procédé selon la revendication 1, **caractérisé en ce que**
l'objet est choisi parmi un groupe comprenant :
un outil d'usinage, en particulier une fraise, un matériau de revêtement, en particulier un matériau de revêtement à surfaces étroites, un consommable, en particulier de la peinture ou de l'agent adhésif, ou une machine d'usinage.

3. Procédé selon l'une quelconque des revendications précédentes,
**caractérisé en ce que** l'utilisation de l'objet concerne une maintenance de l'objet, dans lequel il est préféré que l'objet et le jeu de données (20) soient transférés à une entreprise de maintenance (40) pour la maintenance.

4. Procédé selon l'une quelconque des revendications précédentes,
**caractérisé en ce que** le jeu de données (20) est stocké dans un nuage.

5. Procédé selon l'une quelconque des revendications précédentes,
**caractérisé en ce qu'**un dispositif de commande d'une machine d'usinage accède au jeu de données (20) lors de l'emploi de l'objet.

6. Procédé selon l'une quelconque des revendications précédentes,
**caractérisé en ce que** la clé (31) comprend des droits de lecture et/ou d'écriture pour le niveau de données supplémentaires (22) ou des parties du niveau de données du jeu de données (20).

7. Procédé selon l'une quelconque des revendications précédentes,
**caractérisé en ce que** lors du transfert du jeu de données (20), la clé (31) est transférée à un utilisateur supplémentaire ou à une société de maintenance (40).

8. Procédé selon l'une quelconque des revendications précédentes,
**caractérisé en ce que** la clé (31) présente un ou plusieurs attributs choisis parmi : un accès limité dans le temps pour un nombre défini d'accès ou pour un volume de données défini.

9. Procédé selon l'une quelconque des revendications précédentes,
**caractérisé en ce qu'**un objet actif détecte les informations de l'objet actif ou passif ou une unité ou un appareil de détection des informations de l'objet est utilisée ou utilisé,
dans lequel un objet actif détecte ou génère lui-même une/des information(s), et
dans lequel pour un objet passif, une détection et une sauvegarde de l'information/des informations sont effectuées par une unité ou par un appareil.

10. Système de documentation d'informations d'un objet, comprenant :
un dispositif de stockage destiné à stocker un jeu de données (20) concernant un objet, le jeu de données (20) présentant plusieurs catégories de données (X1, X2, X3) et au moins une des catégories de données permettant l'application de plusieurs niveaux de données,
le jeu de données (20) étant complété lors du transfert du jeu de données (20) à un utilisateur, d'un niveau de données supplémentaire (22), qui peut être protégé par une clé électronique,
une machine, qui est conçue pour utiliser l'objet, la machine comprenant un ou plusieurs capteurs, qui sont conçus pour détecter des informations destinées à utiliser l'objet et pour les sauvegarder dans le niveau de données supplémentaire (22) du jeu de données (20),
la machine étant une machine d'usinage, et
les catégories de données comprenant des données souches (X1), des données d'instance (X2) et des données de processus (X3), les données souches (X1) concernant des données statiques créées côté fabricant, en particulier des données concernant le modèle de l'objet, les données d'instance (X2) concernant des données géométriques de l'objet et des données de processus (X3) concernant des informations concernant l'utilisation de l'objet dans une machine d'usinage.

11. Système selon la revendication 10, **caractérisé en ce que**
le dispositif de stockage est un dispositif de stockage disponible mondialement, en particulier un nuage.

12. Système selon la revendication 10 ou 11, **caractérisé en ce que** la machine d'usinage est une machine d'usinage du bois et/ou une machine destinée à transporter des pièces en forme de panneau.
